Europäisches Patentamt

European Patent Office

Office européen des brevets

(11) Veröffentlichungsnummer: **0 455 890 A1**

(12) **EUROPÄISCHE PATENTANMELDUNG**

(21) Anmeldenummer: 90125559.6

(22) Anmeldetag: 27.12.90

(51) Int. Cl.⁵: **A47J 39/00**, A47J 27/16

(30) Priorität: 27.04.90 DE 4013594

(43) Veröffentlichungstag der Anmeldung:
13.11.91 Patentblatt 91/46

(84) Benannte Vertragsstaaten:
CH DE FR IT LI

(71) Anmelder: **ELOMA GmbH BEDARFSARTIKEL
ZUR GEMEINSCHAFTSVERPFLEGUNG**
**Otto-Hahn-Strasse 10**
**W-8031 Maisach(DE)**

(72) Erfinder: **Spann, Gustav**
**Heinrich-Feller-Strasse 12**
**W-8080 Emmering(DE)**

(74) Vertreter: **Bohnenberger, Johannes, Dr. et al**
**Meissner, Bolte & Partner**
**Widenmayerstrasse 48 Postfach 86 06 24**
**W-8000 München 86(DE)**

(54) **Dampf-Gargerät und Verfahren zum Dampfgaren.**

(57) Beim Dampf-Garen von Nahrungsmitteln mit einem Dampf-Gargerät (1) mit einem geschlossenen Garraum mit einer elektrischen Steuerung, einer Wasserzuführungsleitung (13) mit Ventil und Austrittsöffnung, mit einer Heizung (10) und mit einem Gebläse-Schaufelrad (8), das so relativ zur Austrittsöffnung und zu den Heizelementen (10) angeordnet ist, daß aus der Austrittsöffnung austretendes Wasser (14) vom Gebläse-Schaufelrad (8) zerstäubbar und in Richtung auf die Heizung (10) förderbar ist, besteht das Problem, daß durch die bisher übliche ständige Wasserzufuhr ein zu hoher Energie- und Wasserverbrauch erfolgt. Es wird vorgeschlagen, Nachlaufeinrichtungen vorzusehen und derart mit der Steuerung zu verbinden, daß die Wasserzufuhr bei eingeschalteter Heizung im wesentlichen ständig erfolgt und nach Abschalten der Heizung die Wasserzufuhr nur so lange aufrechterhalten bleibt, bis die Heizung eine voreingestellte Temperatur unterschreitet.

EP 0 455 890 A1

Die Erfindung betrifft ein Dampf-Gargerät nach dem Oberbegriff des Patentanspruches 1 sowie ein Verfahren zum Garen mit einem solchen Dampf-Gargerät.

Ein Dampf-Gargerät der eingangs genannten Art ist aus der DE 37 00 894 A1 bekannt. Bei diesem Gerät wird im Dampf-Garbetrieb kontinuierlich Wasser auf die Nabe des dort vorgesehenen Gebläserades geführt, so daß es vom Gebläserad gleichmäßig vernebelt radial nach außen an Heizelementen vorbei bzw. auf diese geführt wird. Das so entstehende Dampf-Millieu führt zu einem schnellen und aromaschonenden Erhitzen von Speisen, die sich im Innenraum des Dampf-Gargerätes befinden.

Einerseits werden nun mit diesem Gerät bzw. diesem Verfahren, bei welchem kontinuierlich Wasser zugeführt wird, an sich sehr gute Gar-Resultate erzielt, und zwar bei relativ geringem Wasser- und Energieaufwand, insbesondere, wenn man diesen mit dem bisher notwendigen Wasser- und Energieaufwand vergleicht (siehe z.B. DE 34 43 477 A1). Dennoch ist es aus Kostengründen sowie aus Gründen des Umweltschutzes notwendig, Wasser- und Energieverbrauch weiter abzusenken.

Der Erfindung liegt die Aufgabe zugrunde, ein Dampf-Gargerät bzw. ein Verfahren zum Dampf-Garen der eingangs genannten Art dahingehend weiterzubilden, daß Energie und/oder Wasserverbrauch bei gleichbleibender Garleistung vermindert werden.

Diese Aufgabe wird durch die im Kennzeichen des Patentanspruches 1 angegebenen Merkmale vorrichtungsmäßig und durch die im Kennzeichen des Patentanspruches 5 angegebenen Merkmale verfahrensmäßig gelöst.

Überraschenderweise ist es entgegen der eindeutigen Lehre nach der DE 37 00 894 A1 unter besonderen Umständen auch möglich, die Wasserzufuhr nicht kontinuierlich durchzuführen. Es muß jedoch hierbei darauf geachtet werden, daß die Heizeinrichtung hinreichend weit abgekühlt ist, bevor die Wasserzufuhr abgestellt wird. Wird die Wasserzufuhr zu früh abgestellt, ergeben sich sehr hohe Temperatur- und auch Feuchtigkeitsschwankungen im Garraum, so daß bei den Temperaturspitzen Speisen verderben können und durch die Temperatursenken erhöhte Garzeiten benötigt werden.

Es ist nun möglich, die oben genannte Forderung nach hinreichender Abkühlung der Heizung auf verschiedene Weise zu erfüllen. Zum einen ist es möglich, die Temperatur der Heizung direkt mittels eines entsprechenden Temperaturfühlers oder dgl. zu messen und die Wasserzufuhr dann abzuschalten, wenn die Heizung hinreichend abgekühlt ist. Weiterhin ist es möglich, anhand des Temperaturanstiegs beim Aufheizen die von verschiedenen Parametern abhängige Temperaturcharakteristik des Gargerätes einschließlich Heizung und Befüllung des Innenraums festzustellen und dementsprechend eine Wasser-Nachlaufzeit zu bestimmen. Im einfachsten Fall, der naturgemäß zur geringsten Wassereinsparung führt, wird ein Mittelwert für die Wassernachlaufzeit fest voreingestellt. Diese Vorgabe kann auch anhand der Befüllung in verschiedenen Werten erfolgen.

Um die Aufheizung möglichst schnell zu bewerkstelligen, andererseits aber eine Überhitzung des Innenraums aufgrund von "Überschwingen" des Gesamtsystems zu verhindern, ist es von Vorteil, wenn die Heizeinrichtungen zu Beginn der Aufheizung mit voller Leistung und bei Annäherung an eine voreingestellte Soll-Temperatur mit verminderter Leistung oder ganz ohne Leistung betrieben werden.

Weitere wesentliche Merkmale ergeben sich aus den Unteransprüchen und der nachfolgenden Beschreibung bevorzugter Ausführungsformen der Erfindung. Diese werden anhand von Abbildungen näher erläutert. Hierbei zeigen

Fig. 1    eine erste Ausführungsform der Erfindung in schematischer Vorderansicht;

Fig. 2    die Anordnung nach Fig. 1 in Draufsicht;

Fig. 3    eine zweite bevorzugte Ausführungsform der Erfindung in einer Ansicht wie Fig. 1;

Fig. 4    eine Draufsicht auf die Ausführungsform nach Fig. 3;

Fig. 5    ein Blockschaltbild zur Erläuterung des Betriebs einer Vorrichtung nach den Fig. 1 bis 4;

Fig. 6    ein schematisches Diagramm zur Erläuterung des Temperaturverlaufs im Innenraum beim Aufheizen, und

Fig. 7 und 8    schematisierte Zeitdiagramme zur Erläuterung des erfindungsgemäßen Verfahrens bzw. des Betriebs der Vorrichtung.

Bezüglich der Temperaturdiagramme wird ausdrücklich darauf verwiesen, daß diese nicht maßstabsgetreu gezeichnet sind, sondern lediglich die prinziellen Temperaturverläufe wiedergeben sollen.

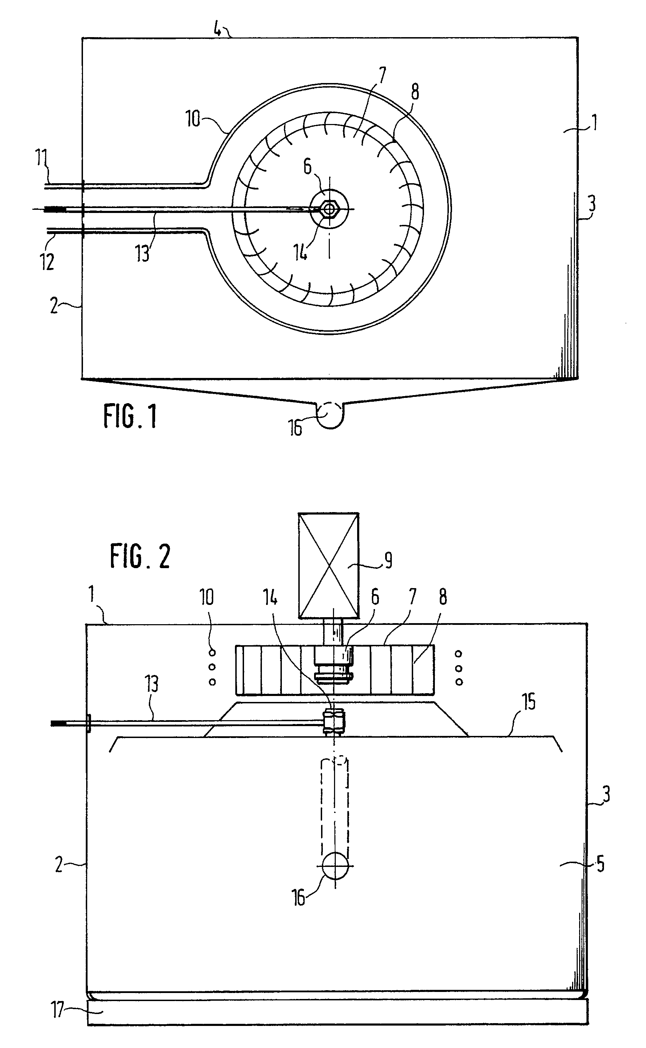

Das Gargerät besteht aus einem geschlossenen Raum mit einer Rückwand 1, mit Seitenwänden 2 und 3, einer Decke 4, einem Boden 5 und einer Tür 17 an der Vorderseite, wie dies in den Fig. 1 bis 4 gezeigt ist.

An der Rückwand 4 ist ein Schaufelrad gelagert, daß eine Nabe 6, eine Scheibe 7 und am Umfang Schaufeln 8 aufweist. Dieses Schaufelrad stellt ein Radialgebläserad dar. Zum Antrieb des Schaufelrads ist ein Elektromotor 9 vorgesehen, der außerhalb des Gehäuses angeordnet ist. Das Schaufelrad ist von einer (Elektro-)Heizschlange (10) umgeben, deren Anschlüsse 11 und 12 dicht durch die Seitenwand 2 oder (bei einer nicht gezeigten Ausführungsform der Erfindung) durch die Rückwand 1 geführt sind. Selbstverständlich ist es auch möglich, anstatt einer Elektroheizung Gas-Wärmetauscherkörper, z. B. auf beiden Seiten des Schaufelrades senkrecht nach oben steigend und den Garraum durchquerend, anzubringen.

Durch die Seitenwand 2 läuft auch eine Wasserzuführungsleitung 13, die - wie weiter unten näher erläutert - über ein Magnetventil mit einer Wasserzuführung in Verbindung bringbar ist.

Bei der in den Fig. 1 und 2 gezeigten Anordnung endet die Wasserzuführungsleitung in einer Düse 14, deren Aussprühöffnung auf die Nabe 6 gerichtet ist, wobei die Anordnung derart getroffen ist, daß die Düse 14 im wesentlichen in der Drehachse der Nabe 6 liegt. Es ist auch möglich, Wasser in den angesaugten Luftstrom zu sprühen.

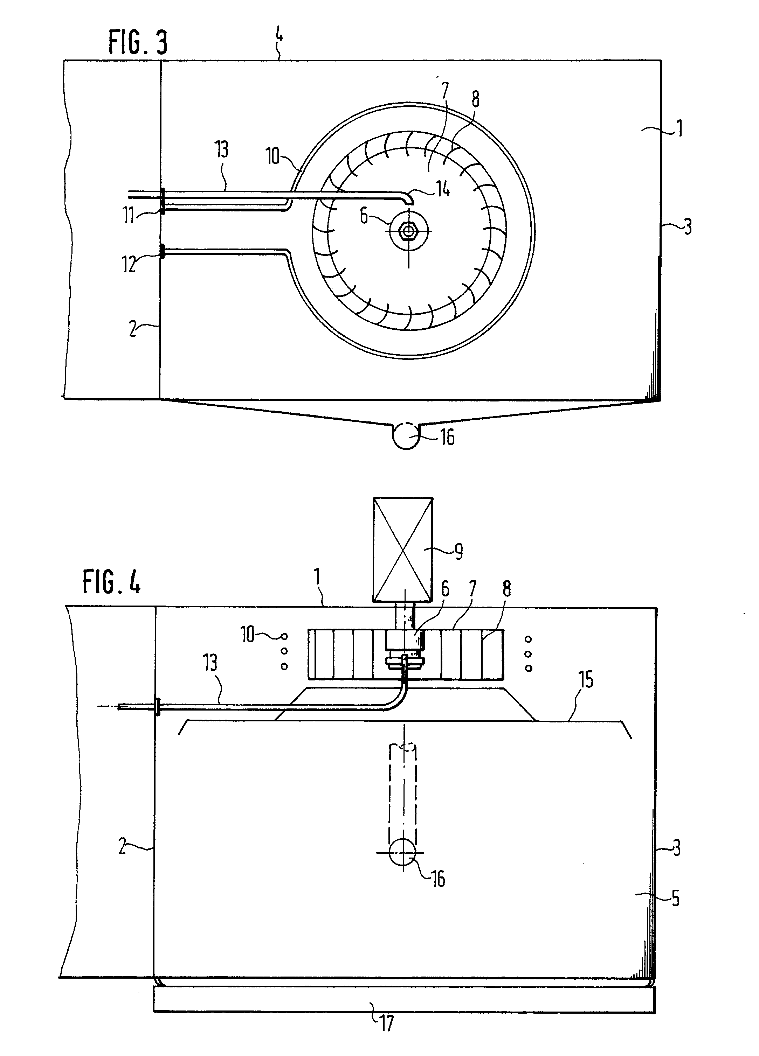

Bei der in den Fig. 3 und 4 bevorzugten Ausführungsform ist lediglich die Wasserzuführung 13 bzw. deren Austrittsöffnung 14 anders angeordnet. Hier endet die Wasserzuführungsleitung ohne Düse über der Habe 6 derart, daß ausströmendes Wasser unabhängig vom Ausström-Druck auf die Habe 6 auftrifft. Das langsam ausströmende Wasser wird durch die sich drehende Nabe 6 verteilt und nachfolgend durch die Schaufeln 8 weiter zerstäubt, ohne daß eine Druck-Zerstäubung notwendig wäre.

Das Schaufelrad mit der Heizschlange 10 und der Wasserzuführungsleitung 13 ist gegenüber dem eigentlichen Garraum, in dem die Speisen einbringbar sind, über eine abnehmbare Abdeckung 15 getrennt. Die Abdeckung 15 ist so ausgebildet, daß eine Luft-(und Dampf-) Zirkulation durch das Gebläserad aufrechterhalten werden kann.

Der Boden 5 des Gerätes ist leicht nach unten gewölbt und weist in seinem tiefsten Punkt einen Ablauf 16 auf.

Durch die Anordnung der elektrischen Heizelemente 10 als Wendel rings um das Gebläserad wird ein besonders günstiger Wärmeübergang erzielt.

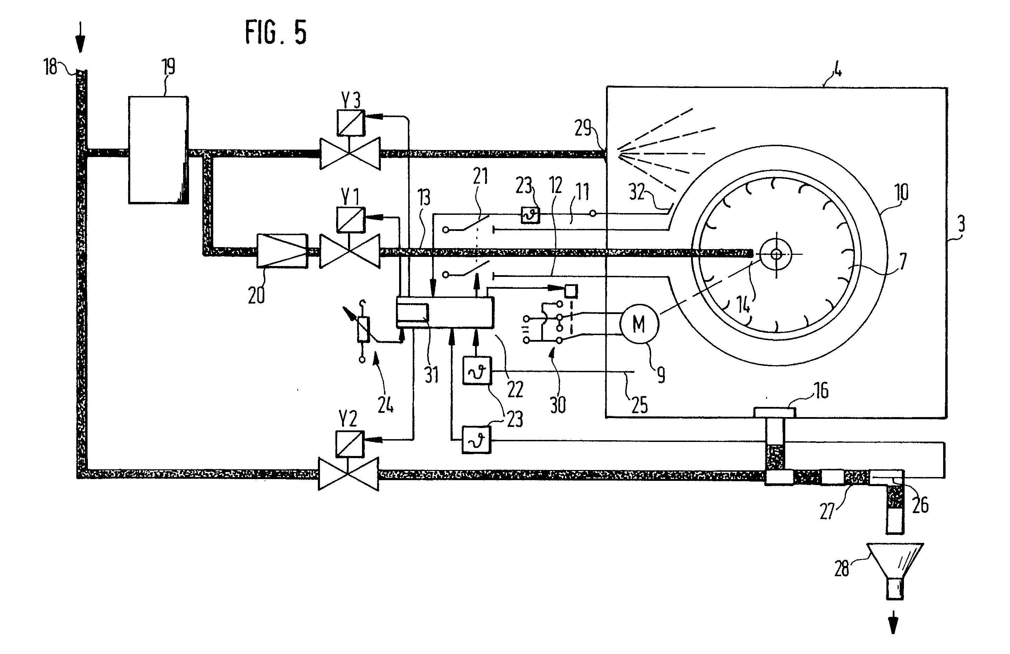

In Fig. 5 ist die Gesamtanordnung als Blockschaltbild gezeigt. Aus dieser Abbildung geht hervor, daß vor der Austrittsöffnung 14 in der Wasserzuführungsleitung 13 ein Magnetventil Y1 angeordnet ist, dem ein Druckminderer 20 vorgeschaltet ist. Bei der in Fig. 3 und 4 gezeigten Ausführungsform ist der Druck auf ca. 1 bar einstellt. Der Druckminderer 20 steht eingangsseitig mit dem Auslaß eines Wasserenthärters 19 in Verbindung, der eingangsseitig mit einem Wasseranschluß 18 verbunden ist. An dieser Stelle sei ausdrücklich erwähnt, daß die Ausströmöffnung 14 in Fig. 5 nur aus Gründen der leichteren Darstellbarkeit seitwärts auf die Nabe gerichtet ist.

Neben der Wasserzuführung über die Austrittsöffnung 14 ist eine Beschwadungsdüse 29 vorgesehen, über die bei Öffnen eines Magnetventils Y3, das in einer Leitung zwischen Beschwadungsdüse 29 und Enthärter 19 angeordnet ist, Wasser in den Garraum (im Betrieb als Heißumluft-Ofen) eingesprüht werden kann.

Der Elektromotor 9 ist bei der in Fig. 5 gezeigten Ausführung als Gleichstrommotor ausgeführt und steht über einen Umpolschalter 30 mit einer Gleichstromquelle in Verbindung. Selbstverständlich ist es auch möglich, andere umsteuerbare Elektromotoren mit entsprechenden Umsteuermitteln anstelle des Gleichstrommotors vorzusehen.

Bei einer entsprechenden Ausbildung der Schaufeln 8 des Gebläserads ist es möglich, je nach Drehrichtung des Elektromotors 9 eine höhere oder niedrigere Luftförderleistung zu erzielen, wobei die Drehzahl des Gebläserades gleich bleibt. Wenn man somit den Elektromotor 9 in einer Drehrichtung betreibt, die im Hinblick auf die Konstruktion der Schaufeln 8 an sich "falsch" ist, so erzielt man eine gute Zerstäubungswirkung und stellt dennoch sicher, daß nicht zuviel Wasser durch den ansonsten starken Luftstrom in den Garraum getrieben wird.

Die Heizelementen 10 sind über einen steuerbaren Schalter 21 an das elektrische Stromnetz angeschlossen. Der steuerbare Schalter 21 wird vom Ausgang einer Steuerung 22 gesteuert. Im Innenraum des Garraums ist ein Temperaturfühler 25 vorgesehen, der mit dem Eingang eines Meßwandlers 23 verbunden ist. Die Ausgangssignale des Meßwandlers 23 werden der Steuerung 22 zugeführt. Weiterhin werden der Steuerung 22 Ausgangssignale eines weiteren Meßwandlers 23 zugeführt, der die Ausgangssignale eines, die Temperatur der Heizelemente 10 abtastenden Temperaturfühlers 32 wandelt.

Weiterhin werden der Steuerung 22 Temperatursignale eines Temperaturfühlers 26 in einem Kondensator 27 zugeführt. Der Kondensator 27 sitzt in einer Leitung zwischen dem Ablauf 16 und einem Ablauftrichter 28. Schließlich werden der Steuerung 22 von Hand einstellbare Sollwerte (z.B. Garraum-Temperatur) zugeführt, die aus Sollwert-Stellern stammen, von denen einer mit der Bezugsziffer 24 angedeutet ist.

Der Kondensator 27 ist über ein Magnetventil Y2 mit dem Wasseranschluß 18 verbunden, so daß bei Austreten von überschüssigem Dampf dieser durch Wasserzufuhr kondensiert werden kann.

Die Steuerung 22 steht über Signalleitungen mit den Ventilen Y1 - Y3, dem Umpolschalter 30 und dem Relais-Schalter 21 in Verbindung, über welchen die Heizung 10 ein- und ausgeschaltet werden kann.

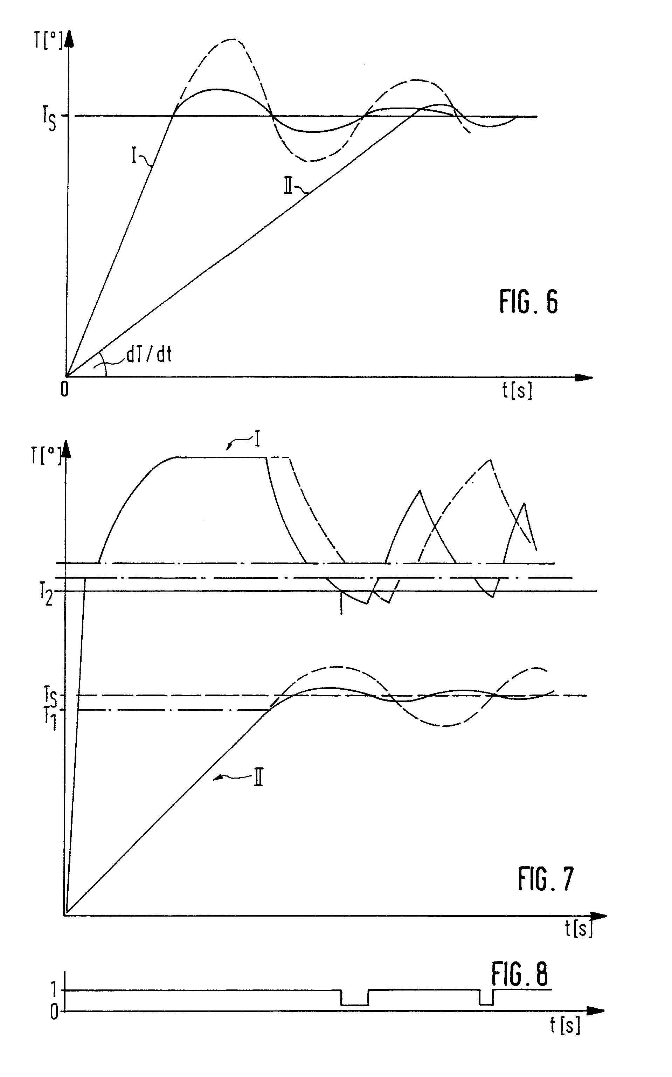

Wenn im Dampfgar-Betrieb nach dem Befüllen die Heizung 10 durch Schließen des Relais-Schalters 21 eingeschaltet wird, so öffnet die Steuerung 22 gleichzeitig das Magnetventil Y1. In Fig. 6 ist schematisiert der Temperaturanstieg (Ausgangssignal des Temperaturfühlers 25) im Innenraum des Gargerätes dargestellt. Hierbei zeigt die Kurve I den Temperaturverlauf im Garraum, wenn dieser mit Gargut höherer Temperatur und geringer Masse und die Kurve II, wenn der Garraum mit Gargut niedrigerer Temperatur (gefrostete Speisen) höherer Masse befüllt ist. Wenn nun bei Erreichen der Soll-Temperatur Ts die Heizung abgeschaltet wird (der Relais-Schalter 21 öffnet sich), so erfolgt noch ein Nachheizen, da die Heizschlange 10 eine nicht unerhebliche Wärmekapazität aufweist und zum schnellen Heizen auf eine sehr hohe Temperatur gebracht wird (ca. 500 °C). Die in Fig. 6 unterbrochene Linie zeigt schematisiert den Temperaturverlauf im Innenraum, der sich dann einstellt, wenn man gleichzeitig mit Öffnen des Relais-Schalters 21 (Abschalten der Heizung) das Magnetventil Y1 schließt, so daß kein Wasser mehr auf die Heizung 10 gelangt. Demgegenüber verläuft die Schwingung erheblich gedämpfter, wenn - wie in Fig. 6 mit der durchgezogenen Linie gezeigt - kontinuierlich Wasser zugeführt wird. Dennoch ist eine gedämpfte Schwingung relativ hoher Anfangsamplituden im Temperaturverlauf feststellbar. Dies führt dazu, daß beim anfänglichen Überschwingen Schaden für empfindliche Speisen entstehen kann, während die Zeitintervalle, während derer sich die Temperatur im Innenraum unter der Solltemperatur befindet, die Garung verzögern.

Vorzugsweise wird nun die Heizung bereits vor Erreichen der Solltemperatur Ts abgestellt, wie dies anhand der Fig. 7 und 8 gezeigt ist. Hierbei stellt die Kurve I aus Fig. 7 den schematisierten Temperaturverlauf der Heizung 10 und die Kurve II den Temperaturverlauf im Innenraum dar. Die unterbrochene Linie zeigt den Fall, in welchem die Heizung erst bei Erreichen der Solltemperatur Ts abgestellt wird, während die ununterbrochene Linie den Temperaturverlauf zeigt, der dann entsteht, wenn die Heizung bereits bei einer Temperatur T1 abgeschaltet wird, welche unterhalb der Solltemperatur Ts liegt. Dieses Abschalten bei der Temperatur T1 ist in Fig. 7 nur für den ersten Aufheiz-Temperaturanstieg gezeigt, wird jedoch vorzugsweise auch während der Ausregelung der nachfolgenden geringeren Temperaturschwankungen durchgeführt.

Die Wirkung des frühzeitigen Abschaltens der Heizung ist aus Fig. 7 offensichtlich. Durch dieses frühzeitige Abschalten wird zum einen ein gleichmäßigerer Verlauf der Innenraum-Temperatur mit geringeren Schwankungen erzielt, zum anderen wird auch die notwendige Heizleistung verringert, was zu nicht unerheblichen Energieeinsparungen führen kann, insbesondere dann, wenn der Garraum mit Speisen gefüllt ist, die nur wenig Wärme aufnehmen.

Der Verlauf der Wasserzufuhr ist in Fig. 8 gezeigt, wobei mit "1" Wasserzufuhr und mit "0" Absperren der Wasserzufuhr bezeichnet ist. Aus dieser Darstellung geht hervor, daß die Wasserzufuhr in jedem Fall dann erfolgt, wenn die Heizung 10 angeschaltet ist. Nach Abschalten der Heizung läuft die Wasserzufuhr noch eine gewisse Zeit und zwar so lange, bis die Temperatur der Heizung 10 im wesentlichen unterhalb einer voreingestellten Temperaturschwelle T2 (siehe Fig. 7) abgefallen ist. Danach kann die Wasserzufuhr abgestellt werden, was zu einer Verminderung des Wasserverbrauches führt. Das Absperren des Ventils Y1 kann nun entweder durch direkte Temperaturmessung an der Heizung 10 erfolgen, kann aber auch anhand von Zeit-Vorgabewerten erfolgen, die in einem Speicher 31 in der Steuerung 22 gespeichert sind. Diese Zeitvorgabewerte werden bei einer bevorzugten Ausführungsform der Erfindung anhand des Temperaturverlaufes dT/dt ermittelt (z.B. aus einer gespeicherten Tabelle ausgelesen), wie dies in Fig. 6 angedeutet ist. Es hat sich nämlich gezeigt, daß bei einem langsameren Temperaturanstieg (Speisen hoher Masse und niedriger Temperatur) nicht nur ein langsamerer Temperaturanstieg, sondern auch eine höhere Schwingungsfrequenz des Systems zu erwarten ist, als bei einem schnellen Temperaturanstieg während des anfänglichen Aufheizens. Auf diese Weise läßt sich je nach Befüllung des Gerätes ein optimaler Temperaturverlauf bei minimalen Wasser- und Energieverbrauch sicherstellen.

## Bezugszeichenliste

| | |
|---|---|
| 1 | Rückwand |
| 2, 3 | Seitenwand |
| 4 | Decke |
| 5 | Boden |
| 6 | Nabe |
| 7 | Scheibe |
| 8 | Schaufel |
| 9 | Elektromotor |
| 10 | Heizung |
| 11, 12 | Heizschlangen-Anschlüsse |
| 13 | Wasserzuführung |
| 14 | Austrittsöffnung |
| 15 | Abdeckung |
| 16 | Ablauf |
| 17 | Tür |
| 18 | Wasseranschluß |
| 19 | Enthärter |
| 20 | Druckminderer |
| 21 | Relais-Schalter |

22 Steuerung
23 Meßwandler
24 Sollwert-Steller
25 Garraum-Temperaturfühler
26 Niederschlags-Temperaturfühler
27 Kondensator
28 Auflauftrichter
29 Beschwadungsdüse
30 Umsteuerschalter
31 Programmspeicher
32 Heiztemperaturfühler

**Patentansprüche**

1. Dampf-Gargerät zum Garen von Nahrungsmitteln in einem geschlossenen Garraum mit einer elektrischen Steuerung (22), einer Wasserzuführungsleitung (13) mit Ventil (Y1) und einer Austrittsöffnung (14), mit einer Heizung (10) und mit einem Gebläse-Schaufelrad (6-8), das so relativ zur Austrittsöffnung (4) und zur Heizung (10) angeordnet ist, daß aus der Austrittsöffnung (14) austretendes Wasser von dem Gebläse-Schaufelrad zerstäubbar und in Richtung auf die Heizung (10) förderbar ist, **dadurch gekennzeichnet**, daß Nachlaufeinrichtungen (Programmspeicher 31, Temperaturfühler 32) vorgesehen und derart mit der Steuerung (22) verbunden sind, daß die Wasserzufuhr bei eingeschalteter Heizung (10) im wesentlichen ständig erfolgt und nach Abschalten der Heizung (10) die Wasser zufuhr so lange aufrechterhalten bleibt, bis die Heizung (10) eine vorbestimmte Temperatur unterschreitet.

2. Dampf-Gargerät nach Anspruch 1, dadurch gekennzeichnet, daß die Nachlaufeinrichtungen einen Temperaturfühler (32) umfassen, der so ausgebildet und angeordnet ist, daß sein Ausgangssignal von der momentanen Temperatur der Heizung (10) abhängig ist.

3. Dampf-Gargerät nach einem der vorhergehenden Ansprüche, dadurch gekennzeichnet, daß die Nachlaufeinrichtungen einen Garraum-Temperaturfühler (25) zum Abtasten der Garraum-Innentemperatur umfassen und derart ausgebildet sind, daß der nach Einschalten der Heizung (10), insbesondere nach einem erstmaligen Einschalten nach Befüllung mit Gargut erfolgende Temperaturanstieg (dT/dt) erfaßt und in Übereinstimmung mit diesem eine Zeitdauer herleitbar ist, für welche die Wasserzufuhr nach Abschalten der Heizung (10) aufrecht erhaltbar ist.

4. Dampf-Gargerät nach einem der vorhergehenden Ansprüche, dadurch gekennzeichnet, daß die Nachlaufeinrichtungen Programmspeichereinrichtungen (31) umfassen, in denen ein Nachlauf-Vorgabeintervall derart speicherbar und abrufbar ist, daß nach Abschalten der Heizung (10) die Wasserzufuhr während des Nachlauf-Vorgabeintervalls aufrechterhaltbar ist.

5. Verfahren zum Dampfgaren von Nahrungsmitteln in einem Dampf-Gargerät mit einem geschlossenen Garraum mit einer elektrischen Steuerung, einer Wasserzuführungsleitung mit Ventil und Austrittsöffnung, mit einer Heizung und mit einem Gebläse-Schaufelrad, das relativ zur Austrittsöffnung und zur Heizung so angeordnet ist, daß aus der Austrittsöffnung austretendes Wasser vom Gebläse-Schaufelrad zerstäubbar und in Richtung auf die Heizung förderbar ist, **dadurch gekennzeichnet**, daß die Wasserzufuhr bei eingeschalteter Heizung im wesentlichen ständig erfolgt, und daß nach Abschalten der Heizung die Wasserzufuhr so lange aufrechterhalten wird, bis die Heizung eine vorbestimmte Temperatur unterschreitet bzw. um ein vorbestimmtes Temperaturintervall abgekühlt ist.

6. Verfahren nach Anspruch 5, dadurch gekennzeichnet, daß die Temperatur der Heizung gemessen und die Wasserzufuhr dann abgeschaltet wird, wenn die Temperatur der Heizung unter einen vorbestimmten Wert sinkt.

7. Verfahren nach einem der Ansprüche 5 oder 6, dadurch gekennzeichnet, daß die Temperatur innerhalb des Garraums gemessen, der Temperaturanstieg beim Aufheizen des Garraums festgestellt und die Wasserzufuhr nach Abschalten der Heizung während eines Zeitintervalls beibehalten wird, das anhand des gemessenen Temperaturanstiegs bestimmt wird.

FIG.1

FIG. 2

**FIG. 3**

**FIG. 4**

7

FIG. 5

FIG. 6

FIG. 7

FIG. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 244 538 (LINCOLN FOODSERVICE PRODUCT INC) <br> * Spalte 3, Zeile 15 - Zeile 33 *** Spalte 6, Zeile 42 - Spalte 7, Zeile 50; Abbildungen ** <br> — — — | 1,2,5,6 | A 47 J 39/00 <br> A 47 J 27/16 |
| D,Y | DE-A-3 443 477 (BUDERUS AG) <br> * das ganze Dokument ** <br> — — — | 1,2,5,6 | |
| D,A | DE-A-3 700 894 (ELOMA GMBH BEDARFSARTIKEL ZUR GEMEINSCHAFTSVERPLEGUNG) <br> * Spalte 4, Zeile 6 - Spalte 6, Zeile 22; Abbildungen 3-6 ** <br> — — — | 1,2,5,6 | |
| A | EP-A-0 188 714 (KURT WOLF & CO KG) <br> * Seite 6, Zeile 13 - Seite 10, Zeile 4; Abbildung 1 ** <br> — — — — — | 3,4,7 | |
| | | | **RECHERCHIERTE SACHGEBIETE (Int. Cl.5)** <br><br> A 47 J <br> F 24 C |

Der vorliegende Recherchenbericht wurde für alle Patentansprüche erstellt

| Recherchenort | Abschlußdatum der Recherche | Prüfer |
|---|---|---|
| Den Haag | 21 August 91 | BODART P.A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

---

& : Mitglied der gleichen Patentfamilie, übereinstimmendes Dokument